# EUROPEAN PATENT SPECIFICATION

(11) **EP 0 735 751 B1**
(45) Date of publication and mention of the grant of the patent: **14.05.2003**
(21) Application number: 96302187.8
(22) Date of filing: 28.03.1996
(51) Int. Cl.: H04N 5/57

(54) **Automatic video signal level compensating circuit**
Schaltung zur automatischen Kompensation des Pegels eines Videosignals
Circuit de compensation automatique du niveau d'un signal vidéo

(30) Priority: 30.03.1995 JP 7339395
(43) Date of publication of application: 02.10.1996
(73) Proprietor: MATSUSHITA ELECTRIC INDUSTRIAL CO., LTD., Kadoma-shi, Osaka 571-8501 (JP)
(72) Inventor: Sakashita, Hirohito, Nara-shi, Nara 631 (JP); Morita, Hisao, Hirakata-shi, Osaka 573 (JP)
(74) Representative: Crawford, Andrew Birkby

(56) References cited:
- GB-A- 2 035 019
- US-A- 4 506 292
- PATENT ABSTRACTS OF JAPAN vol. 018, no. 260 (E-1549), 18 May 1994 & JP 06 038074 A (FUJITSU GENERAL LTD), 10 February 1994
- PATENT ABSTRACTS OF JAPAN vol. 014, no. 095 (E-0892), 21 February 1990 & JP 01 298881 A (HITACHI LTD;OTHERS: 02), 1 December 1989
- PATENT ABSTRACTS OF JAPAN vol. 012, no. 375 (E-666), 7 October 1988 & JP 63 122374 A (MATSUSHITA ELECTRIC IND CO LTD), 26 May 1988
- PATENT ABSTRACTS OF JAPAN vol. 018, no. 060 (E-1499), 31 January 1994 & JP 05 276461 A (SONY CORP), 22 October 1993

## Description

### BACKGROUND OF THE INVENTION

The present invention relates to an automatic video signal compensating circuit for compensating a white and a black levels of a video signal received in a television receiver (TV) to change them into predetermined values respectively.

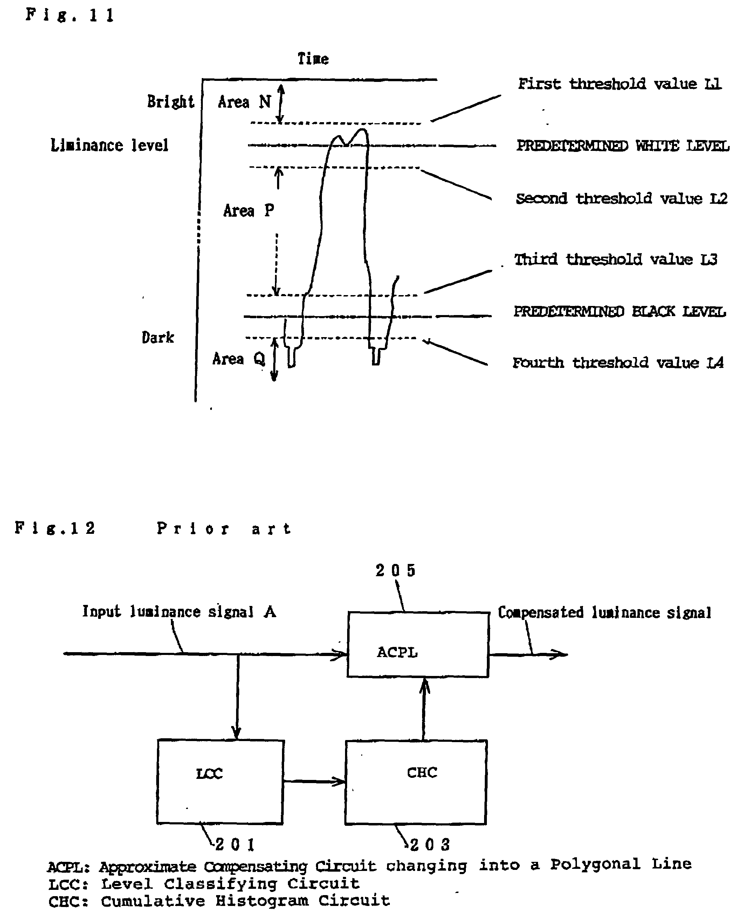

Recently some TV has been incorporated with an automatic video signal compensating circuit which employs artificial intelligence. One example is shown in Fig. 12.

Fig. 12 illustrates a block diagram of a conventional automatic video signal compensating circuit (AVC), where 201, 203 and 205 represent the following circuits:
201: Level Classifying Circuit (LCC) to classify luminance signals according to their intensities,
203: Cumulative Histogram Circuit (CHC) which feeds an output signal from LCC to form a cumulative histogram,
205: Approximate Compensating Circuit changing into a Polygonal Line (ACPL), which compensating an input luminance signal to change it into a polygonal line

The mechanism of AVC is outlined as follows: a luminance signal fed into an LCC 201 is broken down into several luminance level components by several comparators, and then the luminance level components are fed into CHC 203. Suppose that a brighter luminance signal is fed, the signal has so many brighter components that an output of CHC 203 draws an upward curve in the histogram where the horizontal axis represents brightness grade. This upward curve is approximated into a polygonal line, and the polygonal line is compensated toward an ideal cumulative histogram of the luminance signal in ACPL 205. Then, a brighter portion and half tone portion are compensated into dark, which produces an easy-to-see picture in totally well-balanced luminance.

Indeed the AVC compensates a video in real time and produces a quality video, but a large number of circuit elements is required for this function. Thus an inexpensive TV cannot afford to employ such AVC.

JP-A-6038074 discloses an arrangement where a video signal is output through a contrast adjusting circuit, a luminance level adjusting circuit and a blanking circuit. The blanking circuit pulls up signals such as the sync signal to the pedestal level. Feedback to a white level adjusting circuit is provided and operates in the following manner;
when the white level of the output video signal exceeds the standard white level then the feedback is arranged to compress the white level of the output video signal to the standard level,
when the black level of the output video signal exceeds the standard black level, the feedback brings the signal level back to the standard black level
JP-A-63122374 discloses an arrangement where a video signal is output through a black level limiting circuit and an amplitude limiting circuit. A black level control signal is created based on:
i) an average value of the black level of the input video signal is the effective displayed picture area, and
ii) a black level maximum value detected from the output video signal from the black level control signal.

The black level control signal is fed back to an optimum black level setting control circuit to maintain the black level at the standard black level.

An amplitude control signal is created based on:
i) an average amplitude of the signal whose black level is controlled, and
ii) the maximum amplitude value of the output signal from the amplitude limiting circuit.

The amplitude control signal is fed back to the amplitude limiting circuit in order to keep the amplitude constant.

### SUMMARY OF THE INVENTION

The present invention provides an automatic video signal compensating circuit for compensating a luminance signal (A) of a color television receiver, said automatic video signal compensating circuit comprising:
(1) a contrast control circuit (101) for controlling an amplitude of an input luminance signal (A) with a contrast control signal (E), and compensating a white level of the luminance signal (A);
(2) a white level detecting circuit (103) for detecting a white level of the luminance signal (B) having the controlled amplitude in said contrast control circuit (101); and
(3) a detected white level processing circuit (105) for generating said contrast control signal (E) based on a comparison result, characterised in that said comparison is conducted between said detected white level and a white level determined by a contrast setting signal (D) and that said contrast control signal (E) is arranged to cause an increase or decrease in the amplitude of the luminance signal (B). The present invention provides an inexpensive device which maintains a white level of a reproduced video at an approximately ideal level even if the white level of an input luminance signal varies in an unstable manner.

The automatic video signal compensating circuit set out above may further comprise:
(1) a black level compensating circuit (121) adapted to amplify a dark portion of the input luminance signal (A) for compensating a black level by controlling a dark portion of an input luminance signal with a black level signal (K);
(2) a black level detecting circuit (123) for detecting a black level of the luminance signal (H) of which black level was compensated at said black level compensating circuit (121);
(3) a detected black level processing circuit (125) for generating said black level control signal (K) based on a comparison result, said comparison being conducted between the black level detected by said black level detecting circuit (123) and a predetermined black level.

An embodiment of the present invention provides compensation to both white and black levels of an input luminance signal in order to maintain these levels at their predetermined values.

This embodiment of the present invention thus provides an automatic video signal compensating circuit having the following features:
(a) Regular circuits employed in a regular TV, such as a contrast control circuit and a black level compensating circuit are used for this invention to keep the cost inexpensive.
(b) Black and white levels of a reproduced video are kept approximately at ideal levels, even lack and white levels of an input luminance signal vary unstable. A quality video of well-balanced-luminance and easy-to-see thus can be reproduced.

In the above description, in order to simplify the explanation, the white or black level is detected from the compensated luminance signal; however it may be detected from a video signal generated from the cathode current of a Cathode Ray Tube (CRT), so that a change of a white or black level happened at a video processing circuit or at a CRT can be also compensated.

### BRIEF DESCRIPTION OF THE DRAWINGS

Figure 1 is a block diagram illustrating a white level compensating circuit of a video signal according to claim 1.
Fig. 2 is a block diagram illustrating a white level compensating circuit of a video signal according to claim 9.
Fig. 3 is a flow chart explaining an operation of a white level compensating circuit of a video signal according to the main embodiment.
Fig. 4 explains the operation of a white level compensating circuit of a video signal according to claim 7.
Fig. 5 is a block diagram illustrating a black level compensating circuit of a video signal according to claim 2.
Fig. 6 is a block diagram illustrating a black level compensating circuit of a video signal according to claim 10.
Fig. 7 is a flow chart explaining an operation of a black level compensating circuit of a video signal.
Fig. 8 illustrates an operation of a black level compensating circuit.
Fig. 9 is a block diagram illustrating black level and a white level compensating circuits.
Fig. 10 is a block diagram illustrating black level and a white level compensating circuits according to claim 9 and claim 10.
Fig. 11 illustrates operations of black level and a white level compensating circuits according to claim 8.
Fig. 12 is a block diagram illustrating an embodiment of a conventional video signal compensating circuit.

### EXEMPLARY EMBODIMENT

The main embodiment relates to a circuit wherein a white level from a contrast controlling circuit which controls the contrast of an input luminance signal, or a white level of a video signal generated form cathode current of a CRT, is fedback to the input luminance signal, and thereby the circuit maintains the white level of the luminance signal at the predetermined level.

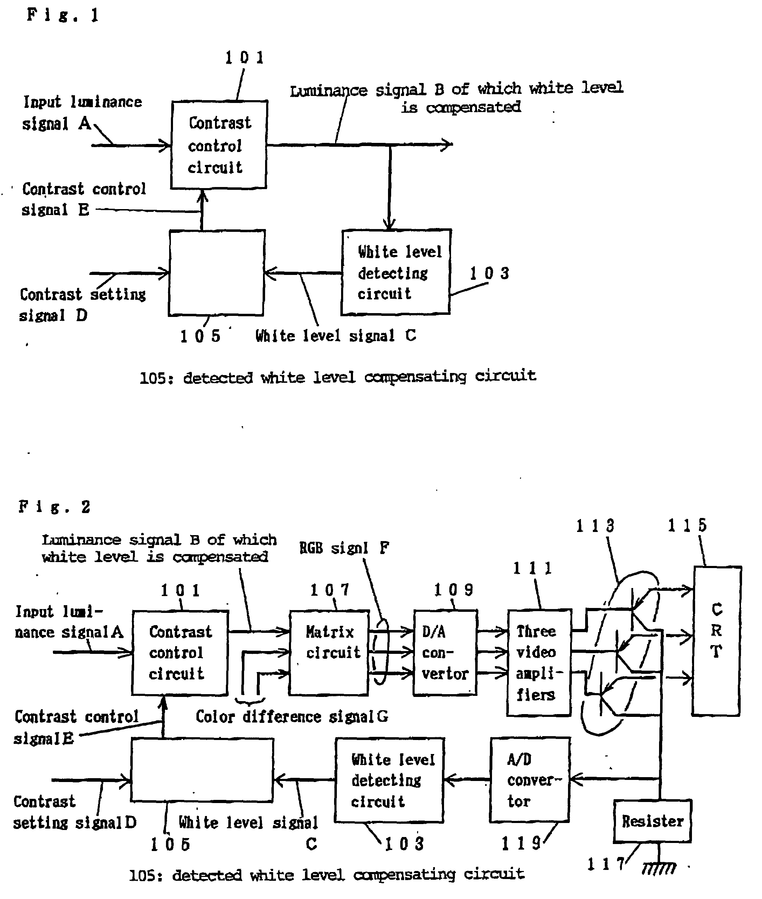

Fig. 1 illustrates the main embodiment. A contrast controlling circuit 101 compensates a white level by means of controlling an amplitude of an input luminance signal A with a contrast controlling signal E. A white level detecting circuit 103 receives an output signal B of which white level was compensated in the contrast controlling circuit 101, then detects a white level of the luminance signal, thereby outputs a white level signal C. A process circuit 105 of a detected white level compares a white level determined by a contrast setting signal D supplied from outside with the above white level signal C, and generates the contrast controlling signal E based on the comparison result. Through this structure, a stable luminance signal is fed into a CRT even if an input luminance signal is unstable in its white level.

Fig. 2 is a block diagram illustrating the main embodiment. The contrast controlling circuit 101 compensates a white level by means of controlling an amplitude of the input luminance signal A with the contrast controlling signal E. A matrix circuit 107 produces RGB (Red, Green and Blue) signals F by using a luminance signal B of which white level was compensated and a color difference signal G. A digital to analog converter(D/A converter) 109 converts the RGB signals F into analog video signals. A video signal amplifier 111 amplifies the converted analog video signals upto outputs high enough to drive the CRT. The video signal amplifier 111 consists of three sub amplifiers assigned to three colors respectively. Three PNP transistors 113 feed the output signals assigned to three colors respectively tapped off from the video signal amplifier 111 to the cathode of the CRT. The CRT 115 converts the video signal into a picture and display it.
The collectors of the PNP transistors 113 earth through a resistor 117, and an analog video signal is generated on both ends of the resistor. An analog to digital converter (A/D converter) 119 receives the analog video signal and converts it into a digital video signal. The white level detecting circuit 103 detects the white level from the digital video signal converted by the A/D converter 119, thereby outputs the white level signal C.
A detected white level processing circuit 105 compares a white level determined by a contrast setting signal D supplied from outside with the above white level signal C, and generates the contrast controlling signal E based on the comparison result. Through this structure, the white level from the video signal which is processed in the video signal amplifier 111 and CRT 115 is detected, and the changes of the white level happened at the video signal amplifier or at the CRT can be compensated.

Further in Fig. 1 and Fig. 2, the detected white level processing circuit 105 can be operated in such a way that when a white level becomes greater than the predetermined value, the contrast controlling signal E should be decreased by a specified number of steps, and when a white level becomes less than the predetermined value, the contrast controlling signal E should be increased by a specified number of steps. Regardless a different value between the predetermined white level and the white level signal C, decreased or increased volume of feedback controlling is kept at a specified number of steps, and if the number of steps is specified at reasonable small level, a drastic change of a picture due to a compensation can be avoided.

When the different volume is great, the feedback controlling may be repeated in plural times until the white level becomes near to the predetermined value. The time lag due to these repeats can avoid a drastic contrast change and realize gradual contrast controlling.

Still further in Fig. 1 and Fig. 2, the detected white level processing circuit 105 generates the contrast controlling signal E which is adaptively controlled by using the different value between the predetermined white level and white level signal C, thereby improves a response to a drastic change of the white level of the input luminance signal A.

Still another feature can be cited by referring to Fig. 1 and Fig. 2. When the difference between the predetermined white level and the white level signal C is less than a specified value, the detected white level processing circuit 105 can maintain the value of the contrast controlling signal E as it is, thereby improve stabilities of the circuit operation and picture quality.

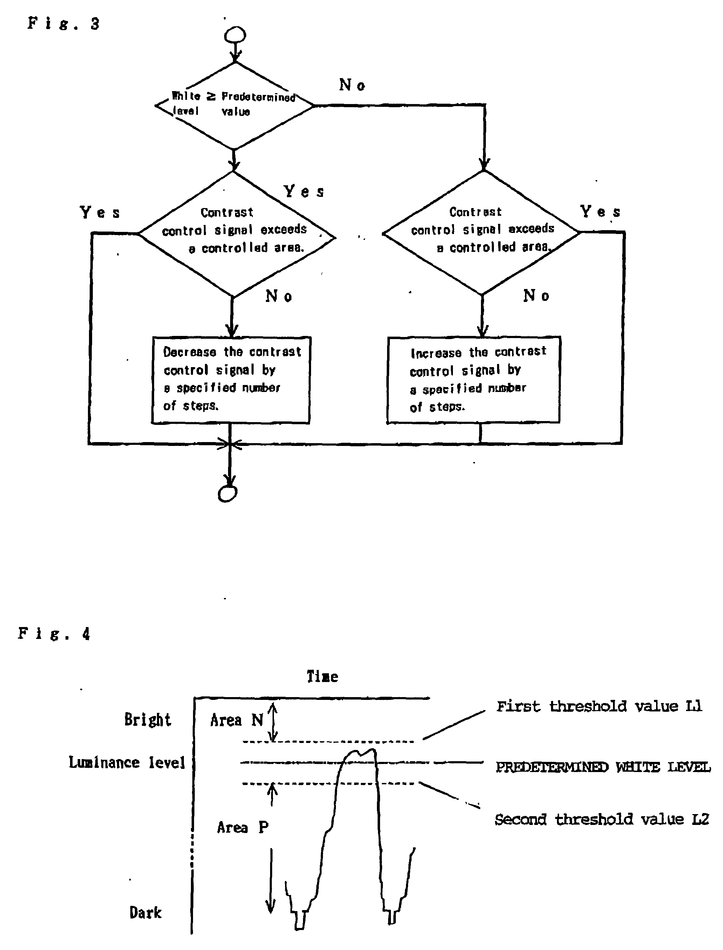

This function is detailed by referring to Fig. 4. When the white level signal C stays in the area N of which value is greater than the first threshold value L1, the contrast controlling signal E is reduced. When the white level signal C stays in the area P of which value is less than the second threshold value L2, the contrast controlling signal E is increased. When the white level signal C stays between the first and second threshold values, the detected white level processing circuit 105 works in order to prevent the contrast controlling signal from being changed.

Further additional feature is cited by referring to Fig. 1 and Fig. 2. When the contrast controlling signal E is increased or decreased in response to the white level signal C, after making sure that the increased or decreased value does not exceed the control limit of the contrast controlling circuit 101, the detected white level processing circuit 105 may generate the contrast controlling signal E. This mechanism is shown in Fig. 3.

A circuit maintaining a black level of a luminance signal tapped off from a black level compensating circuit at a predetermined level is explained. The mechanism of this circuit is to feedback a black level of a luminance signal tapped off from a black level compensating circuit which controls an amplitude of a dark portion of the input luminance signal to an input luminance signal, or to feedback a black level of a video signal generated from cathode current of a CRT to the input luminance signal.

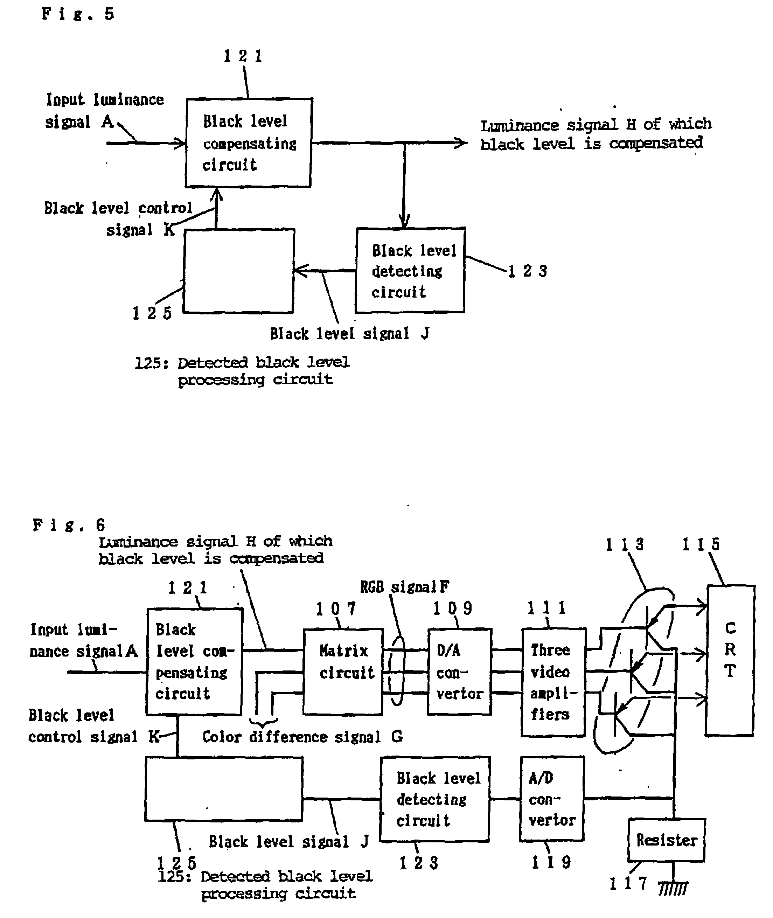

Fig. 5 is a block diagram illustrating the black level compensating circuit. A black level compensating circuit 121 outputs a luminance signal H of which black level was compensated by controlling an amplitude of a dark portion of input luminance signal A with a black level controlling signal K. A black level detecting circuit 123 detects a black level of the luminance signal through feeding the luminance signal H of which black level was compensated in the black level compensating circuit 121, and outputs a black level signal J. A detected black level processing circuit 125 generates the black level controlling signal K by comparing the black level signal J with the predetermined black level with the black level. This mechanism can provide a stable luminance signal to the CRT even if a luminance signal having an unstable black level is fed.

Fig. 6 is another block diagram illustrating the black level compensating circuit. A black level compensating circuit 121 outputs the luminance signal H of which black level was compensated by controlling an amplitude of a dark portion of input luminance signal A with the black level controlling signal K. A matrix circuit 107 generates RGB signals F through two color difference signals G and the luminance signal H including the compensated black level. The amplifier 111 consists of three sub amplifiers assigned to three colors respectively. Three PNP transistors 113 feed the output signals assigned to three colors respectively tapped off from the video amplifier 111 to the cathode of the CRT. The CRT 115 converts the video signal into a picture and displays it. The collectors of the PNP transistors 113 earth through the resistor 117, and an analog video signal is generated on both ends of the resistor. The analog to digital converter (A/D converter) 119 receives the analog video signal and converts it into a digital video signal. The black level detecting circuit 123 detects the black level from the digital video signal converted by the A/D converter 119, thereby outputs a black level level signal J. The detected black level processing circuit 125 compares the black level signal J with the predetermined black level and generates the black level controlling signal K based on the comparison result.

This structure can detect the black level signal J from a video signal running through the video amplifying circuit and the CRT, and compensate also black level changes happened therein.

Further in Fig. 5 and Fig. 6, the detected black level processing circuit 125 can be operated in such a way that when the black level becomes greater than the predetermined value, the black level control signal K is increased by a specified number of steps, and when less than the predetermined value, decreased by the specified number of steps. Regardless a different value between the predetermined black level and the black level signal J, decreased or increased value of feedback controlling is kept at the specified number of steps, and if a number of steps is specified at reasonable small level, drastic change of a picture due to a compensation can be avoided.

When a different value is great, the feedback controlling may be repeated in plural times until the black level becomes near to the predetermined value. The time lag due to these repeats can avoid a drastic black level change, and realize gradual control of a dark portion.

Still further in Fig. 5 and Fig. 6, the the detected black level processing circuit 125 generates the black level control signal K which is adaptively controlled by using the difference between the predetermined black level and black level signal J, thereby improves a response to a drastic change of the black level of the input luminance signal A.

Still another feature can be cited by referring to Fig. 5 and Fig. 6. When the difference between the predetermined black level and the black level signal J is less than a specified value, the detected black level processing circuit 125 can maintain the value of the black level control signal K as it is, thereby improves stabilities of the circuit operation and picture quality.

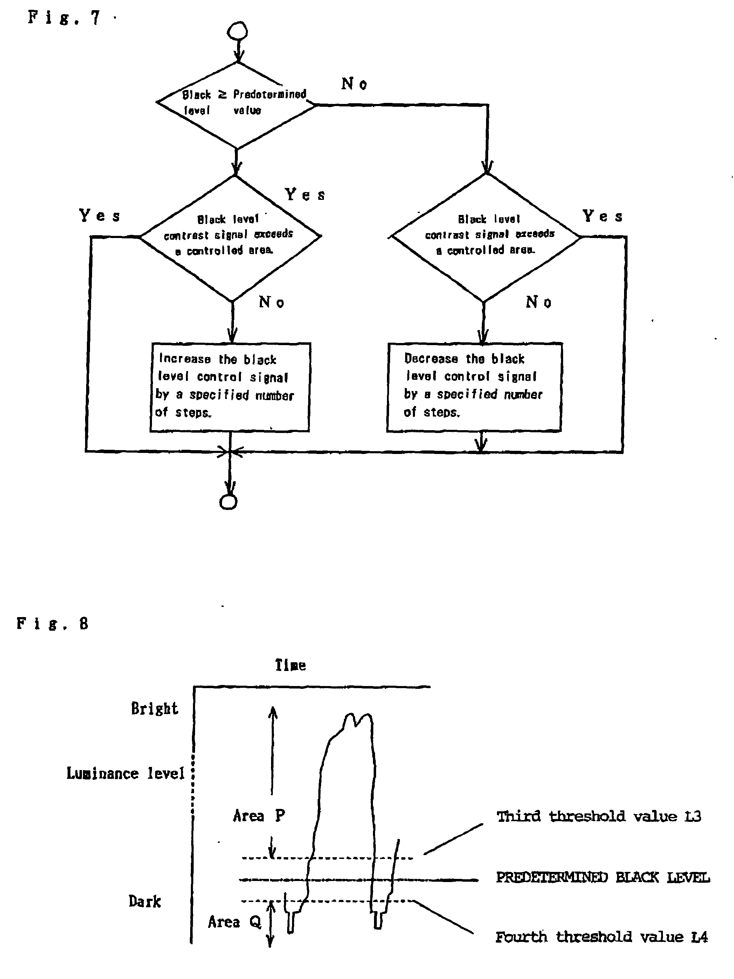

This function is detailed by referring to Fig. 8. When the black level signal J stays in the area P of which value is greater than the third threshold value L3, the black level control signal K is increased. When the black level signal J stays in the area Q of which value is less than the fourth threshold value L4, the black stretching control signal K is reduced. When the black signal level signal J stays between the third and fourth threshold values, the processing circuit 125 of the detected black level works in order to prevent the black level control signal K from being changed.

Further additional feature is cited by referring to Fig. 6 and Fig. 7. When the black level control signal K is increased or decreased in response to the black level signal J, after making sure that the increased or decreased value does not exceed the control limit of the black level control circuit 121, the detected black level processing circuit 125 may generate the black level control signal K. This mechanism is shown in Fig. 7.

A circuit for maintaining both white and black levels of a luminance signal tapped off from this circuit itself at their predetermined values can be formed. The circuit feeds back the white and black levels of the luminance signal of which white and black levels were compensated to the input luminance signal, or the circuit feeds back white and black levels of a video signal generated by cathode current of the CRT to the input luminance signal.

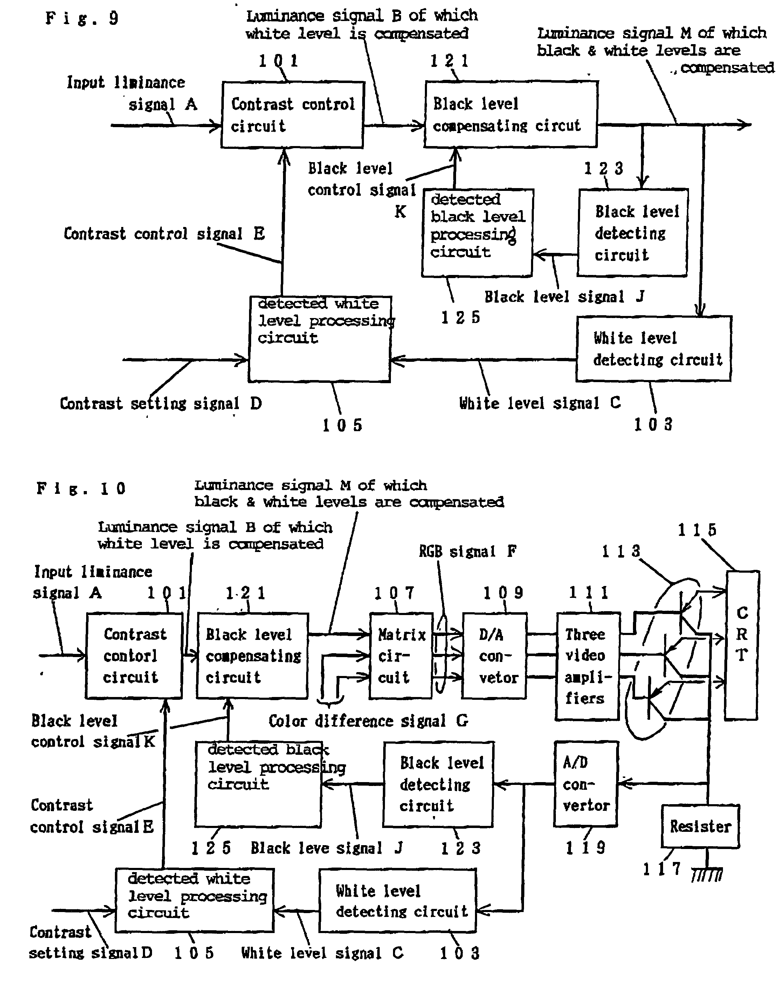

Fig. 9 is a block diagram illustrating such a circuit. The contrast controlling circuit 101 receives an input luminance signal A and compensates a white level by controlling an amplitude of the input luminance signal A with the contrast control signal E. The black level control circuit 121 receives the luminance signal B of which white level was compensated in the contrast control circuit 101, and compensates a black level of the luminance signal B by controlling an amplitude of a dark portion of the luminance signal B with the black level control signal K, thereby outputs a luminance signal M having compensated white and black levels.

A white level detecting circuit 103 receives the luminance signal M including compensated white and black levels, and detects the white level thereof, thereby outputs a white level signal C. The detected white level processing circuit 105 compares the white level signal C with a white level which is determined by the contrast setting signal D supplied from outside, and generates the contrast controlling signal E based on the comparison result. A black level detecting circuit 123 receives the luminance signal M including compensated white and black levels, and detects the black level thereof, thereby outputs a black level signal J. The detected black level processing circuit 125 compares the black level signal J with a predetermined black level, thereby outputs the black level control signal K based on the comparison result.

The above structure makes it possible to supply a stable luminance signal to the CRT even if a luminance signal having unstable black and white levels is fed, because both white and black levels of the input luminance signal A are feedbacked respectively by the tapped off signal from the black level compensating circuit.

Fig. 10 is a block diagram illustrating such a circuit too. The contrast controlling circuit 101 receives the input luminance signal A, and controls an amplitude thereof with the contrast control signal E, thereby compensates the white level of an input luminance signal. The black level compensating circuit 121 receives the luminance signal B of which white level was compensated, and the amplitude of the dark portion thereof is controlled with the black level control signal K, thereby outputs the luminance signal M having compensated white and black levels.

The matrix circuit 107 produces the RGB signals F by using the black level compensating circuit and two color difference signals G. The D/A converter 109 receives a digital video signal comprising three colors from the matrix circuit 107 and converts it to analog video signal. The three video amplifiers 111 amplify the output from the D/A converter 109 upto the level enough to drive the CRT. The three PNP transistors 113 feed output signals of three colors from the video amplifiers 111 into the CRT cathodes. The CRT 115 converts a video signal into a picture and displays it thereon. The collectors of the PNP transistors 113 are connected each other and earthed through a resister 117, and an analog video signal is generated on both ends of the resister 117. The A/D converter 119 receives the analog video signal, then converts it into a digital video signal. The white level detecting circuit 103 receives the digital video signal tapped off from the A/D converter 119, and detects the white level thereof, then outputs the white level signal C. The detected white level processing circuit 105 compares the white level signal C with a white level which is determined by the contrast setting signal D supplied from outside. The black level detecting circuit 123 receives the digital video signal tapped off from the A/D converter 119, and detects the black level thereof, then outputs the black level signal J. The processing circuit 125 of the detected black level compares the black level signal J with the predetermined black level, and generates the black level control signal K based on the comparison result.

The above structure makes it possible to detect the white level signal C and black level signal J from the video signals running through the video amplifier and the CRT, and feedback them to the input luminance signal A, then compensate the changes of the white and black levels happened in the video amplifier or the CRT.

Further in Fig. 9 and Fig. 10, the detected white level processing circuit 105 can be operated in such a way that when a white level becomes greater than the predetermined value, the contrast controlling signal E is decreased by a specified number of steps, and when less than the predetermined value, increased by the specified number of steps. At the same time, the detected black level processing circuit 125 can be operated in such a way that when a black level becomes greater than the predetermined value, the black level control signal K is increased by a specified number of steps, and when less than the predetermined value, decreased by the specified number of steps.

Regardless a different value between the predetermined white level and the detected white level, decreased or increased value of feedback control to the contrast controlling circuit 101 is kept at a specified number of steps. In the case of the black level, the increased or decreased value of feedback control to the black level compensating circuit 121 is also kept at a specified number of steps. If the number of steps is specified at reasonable small level, drastic change of a picture due to a compensation can be avoided.

When a different value is great, the feedback controlling may be repeated in plural times until the white level becomes near to the predetermined value. The time lag due to the repeats can avoid a drastic contrast change, and realize gradual contrast control.

Still further in Fig. 9 and 10, the contrast control signal E is changed adaptively to white level changes by using the difference between the predetermined white level and the white level signal C in the detected white level processing circuit 105. The black stretching control signal K is also changed adaptively to black level changes by using the different value between the predetermined black level and black level signal J. Thus the compensation response to drastic changes of white or black level of the input luminance signal A can be improved.

Fig. 9 and Fig. 10 also illustrates that when the difference value between the predetermined white level and the white level signal C in the detected white level processing circuit 105 is less than a specified value, the contrast control signal E keeps the value as it is. In the same manner, when the difference value between the predetermined black level and the black level signal J is less than a specified value, the black level control signal K keeps the value as it is. Thus stabilities of picture quality and circuit operation can be improved.

This function is detailed by referring to Fig. 11. When the white level signal C stays in the area N of which value is greater than the first threshold value L1, the contrast control signal E is decreased. When the white level signal C stays in the area P of which value is less than the second threshold value L2, the contrast control signal E is increased. When the white level signal C stays between the first and second threshold values, the contrast control signal is not changed. In the same manner, when the black level signal J stays in the area P of which value is greater than the third threshold value L3, the black level control signal K is increased, and when the black level signal J stays in the area Q of which value is less than the fourth threshold value L4, the black level control signal K is decreased. When the black level signal J stays between the third and fourth threshold values L3 and L4, the detected black level processing circuit 125 works to prevent the black level control signal K from being changed.

As explained above, the present invention utilizes some regular circuits even an inexpensive TV has in order to maintain optimum white and black levels of an luminance signal, thereby reproduces a picture having well balanced contrast as well as makes full use of dynamic ranges of the subsequent stages including a display device. As a result, pictures of easy-to-see can be reproduced.

When explaining the present invention by using Fig. 2, 6 and 10, in order to simplify the description, the following structure was employed: a luminance signal is converted into primary color signals in the matrix circuit, then fed into the video amplifier which drives the CRT through PNP transistors. However, such a structure as follows also produces the same effect: a luminance signal and color difference signals are fed directly into the video amplifiers, then a matrix operation is conducted in the video amplifiers.

In the description, the luminance signal is treated as a digital signal; however, when the luminance signal is an analog signal, the same effect can be produced too.

## Claims

1. An automatic video signal compensating circuit for compensating a luminance signal (A) of a color television receiver, said automatic video signal compensating circuit comprising:
(1) a contrast control circuit (101) for controlling an amplitude of an input luminance signal (A) with a contrast control signal (E), and compensating a white level of the luminance signal (A);
(2) a white level detecting circuit (103) for detecting a white level of the luminance signal (B) having the controlled amplitude in said contrast control circuit (101); and
(3) a detected white level processing circuit (105) for generating said contrast control signal (E) based on a comparison result, **characterised in that** said comparison is conducted between said detected white level and a white level determined by a contrast setting signal (D) and that said contrast control signal (E) is arranged to cause an increase or decrease in the amplitude of the luminance signal (B).

2. An automatic video signal compensating circuit according to claim 1 further comprising:
(1) a black level compensating circuit (121) adapted to amplify a dark portion of the input luminance signal (A) for compensating a black level by controlling a dark portion of an output signal (B) from said contrast control circuit (101) with a black level control signal (K);
(2) a black level detecting circuit (123) for detecting a black level of said luminance signal (M) having the compensated black level in the black level compensating circuit(121); and
(3) a detected black level processing circuit (125) for generating said black level control signal (K) based on a further comparison result, said comparison being conducted between the detected black level in said black level detecting circuit (123) and a predetermined black level,
wherein said white level detecting circuit (103) is arranged to detect a white level of said black level compensated signal (M).

3. An automatic video signal compensating circuit according to claim 1 wherein said detected white level processing circuit increases or decreases the contrast control signal by specified steps based on the comparison result.

4. An automatic video signal compensating circuit according to claim 2, wherein said detected white level processing circuit (103) increases or decreases the contrast control signal by specified steps based on the comparison result and
said black level processing circuit (125) increases or decreases the black level control signal by specified steps based on the further comparison result.

5. An automatic video signal compensating circuit according to claim 1, wherein said detected white level processing circuit (105) increases or decreases the contrast control signal (E) by a number of steps adaptively determined in response to the comparison result.

6. An automatic video signal compensating circuit according to claim 2, wherein said detected white level processing circuit (105) increases or decreases the contrast control signal by a number of steps adaptively determined in response to the comparison result and
said black level processing circuit (125) increases or decreases the black level control signal by a number of steps adaptively determined in response to the further comparison result.

7. An automatic video signal compensating circuit according to claim 1, wherein said detected white level processing circuit (105) decreases the contrast control signal (E) when the white level is greater than a first threshold value,
increases the contrast control signal (E) when the white level is less than a second threshold value, and
maintains the contrast control signal (E) as it is when the white level stays between the first and second threshold values.

8. An automatic video signal compensating circuit according to claim 2, wherein
said detected white level processing circuit (105) decreases the contrast control signal (E) when the white level is greater than a first threshold value,
increases the contrast control signal (E) when the white level is less than a second threshold value, and
maintains the contrast control signal (E) as it is when the white level stays between the first and second threshold values; and
said detected black level processing circuit (125)
decreases the black level control signal (K) when the black level is greater than a third threshold value,
increases the black level control signal (K) when the black level is less than a fourth threshold value, and
maintains the black level as it is when the black level stays between the third and fourth threshold values.

9. An automatic video signal compensating circuit according to claim 1 further comprising:
(1) a matrix circuit (107) for producing RGB signals (F) by using an output of said contrast control circuit (101) and two color difference signals (G);
(2) a digital-to-analog converter (109) (D/A converter) for converting digital output signals (F) from said matrix circuit (107) into analog video signals;
(3) three video amplifiers (111) for amplifying said analog video signals up to an enough level to drive a cathode ray tube (115) (CRT);
(4) three PNP transistors (113) for detecting cathode ray current of the CRT (115) through receiving the output of three colours from said video amplifiers in each base of thereof, connecting emitters thereof to three cathodes of the CRT (115) and bundling collectors;
(5) a resistor (117) wired between said connected collectors and earth;
(6) an analog-to-digital converter (119) (A/D converter) for converting the analog video signal into digital video signal, said A/D converter (119) receiving signals from the junction point of said connected collectors and said resistor and outputting the analog video signal to the white level detecting circuit (103).

10. The automatic video signal compensating circuit of claim 2 further comprising;
(1) a matrix circuit (107) for producing RGB signals (F) by using an output of said contrast control circuit (101) and two color difference signals (G);
(2) a digital-to-analog converter (109) (D/A converter) for converting digital output signals (F) from said matrix circuit (107) into analog video signals;
(3) three video amplifiers (111) for amplifying said analog video signals up to an enough level to drive a cathode ray tube (115) (CRT);
(4) three PNP transistors (113) for detecting cathode ray current of the CRT (115) through receiving the output of three colours from said video amplifiers in each base of thereof, connecting emitters thereof to three cathodes of the CRT (115), and bundling collectors;
(5) a resistor (117) wired between said connected collectors and earth;
(6) an analog-to-digital converter (119) (A/D converter) for converting the analog video signal into digital video signal, said A/D converter (119) receiving signal from the junction point of said connected collectors and said resistor and outputting the analog video signal to the white level detecting circuit (103) and the black level detecting circuit (123).

## Patentansprüche

1. Automatische Vldeosignal-Ausgleichsschaltung zum Ausgleichen eines Helligkeitssignals (A) eines Farbfernsehempfängers, wobei die automatische Videosignal-Ausgleichsschaltung umfasst:
1. eine Kontraststeuerschaltung (101), die eine Amplitude eines Eingangs-Helligkeitssignals (A) mit einem Kontraststeuersignal (E) steuert und einen Weißpegel des Helligkeitssignals (A) ausgleicht;
2. eine Weißpegel-Erfassungsschaltung (103), die einen Weißpegel des Helligkeitssignals (B) mit der in der Kontraststeuerschaltung (101) gesteuerten Amplitude erfasst; und
3. eine Schaltung (105) zum Verarbeiten des erfassten Weißpegels, die das Kontraststeuersignal (E) auf der Basis eines Vergleichsergebnisses erzeugt, **dadurch gekennzeichnet, dass** der Vergleich zwischen dem erfassten Weißpegel und einem Weißpegel ausgeführt wird, der von einem Kontrasteinstellsignal (D) bestimmt wird, und dass das Kontraststeuersignal eine Zunahme oder eine Abnahme der Amplitude des Helligkeitssignals (B) bewirkt.

2. Automatische Videosignal-Ausgleichsschaltung nach Anspruch 1, die des Weiteren umfasst:
1. eine Schwarzpegel-Ausgleichsschaltung, die einen Dunkelabschnitt des Eingangs-Helligkeitssignals (A) verstärkt, um einen Schwarzpegel auszugleichen, indem ein Dunkelabschnitt eines Ausgangssignals (B) von der Kontraststeuerschaltung (101) mit einem Schwarzpegel-Steuersignal (A) gesteuert wird;
2. eine Schwarzpegel-Erfassungsschaltung (123), die einen Schwarzpegel des Helligkeitssignals (M) mit dem in der Schwarzpegel-Ausgleichsschaltung (121) ausgeglichenen Schwarzpegel erfasst; und
3. eine Schaltung (125) zum Verarbeiten des erfassten Schwarzpegels, die das Schwarzpegel-Steuersignal (K) auf der Basis eines weiteren Vergleichsergebnisses erzeugt, wobei der Vergleich zwischen dem in der Schwarzpegel-Erfassungsschaltung (123) erfassten Schwarzpegel und einem vorgegebenen Schwarzpegel ausgeführt wird,
wobei die Weißpegel-Erfassungsschaltung (103) einen Weißpegel des Signals (M) mit ausgeglichenem Schwarzpegel erfasst.

3. Automatische Videosignal-Ausgleichsschaltung nach Anspruch 1, wobei die Schaltung zum Verarbeiten des erfassten Weißpegels das Kontrast-Steuersignal auf der Basis des Vergleichsergebnisses um vorgegebene Schritte erhöht oder absenkt.

4. Automatische Videosignal-Ausgleichsschaltung nach Anspruch 2, wobei die Schaltung (103) zum Verarbeiten des erfassten Weißpegels das Kontraststeuersignal auf der Basis des Vergleichsergebnisses um vorgegebene Schritte erhöht oder absenkt, und
die Schwarzpegel-Verarbeitungsschaltung (125) das Schwarzpegel-Steuersignal auf der Basis des weiteren Vergleichsergebnisses um vorgegebene Schritte erhöht oder absenkt.

5. Automatische Videosignal-Ausgleichsschaltung nach Anspruch 1, wobei die Schaltung (105) zum Verarbeiten des erfassten Weißpegels das Kontraststeuersignal (E) um eine Zahl von Schritten erhöht oder absenkt, die adaptiv in Reaktion auf das Vergleichsergebnis bestimmt wird.

6. Automatische Videosignal-Ausgleichsschaltung nach Anspruch 2, wobei die Schaltung (105) zum Verarbeiten des erfassten Weißpegels das Kontraststeuersignal um eine Zahl von Schritten erhöht oder absenkt, die adaptiv in Reaktion auf das Vergleichsergebnis bestimmt wird, und
die Schwarzpegel-Verarbeitungsschaltung (125) das Schwarzpegel-Steuersignal um eine Zahl von Schritten erhöht oder absenkt, die adaptiv in Reaktion auf das weitere Vergleichsergebnis bestimmt wird.

7. Automatische Videosignal-Verarbeitungsschaltung nach Anspruch 1, wobei die Schaltung (105) zum Verarbeiten des erfassten Weißpegels das Kontraststeuersignal (E) absenkt, wenn der Weißpegel über einem vorgegebenen Schwellenwert liegt,
das Kontraststeuersignal (E) erhöht, wenn der Weißpegel unter einem zweiten Schwellenwert liegt, und
das Kontraststeuersignal (E) unverändert lässt, wenn der Weißpegel zwischen dem ersten und dem zweiten Schwellenwert bleibt.

8. Automatische Videosignai-Ausgleichsschaltung nach Anspruch 2, wobei:
die Schaltung (105) zum Verarbeiten des erfassten Weißpegels das Kontraststeuersignal (E) absenkt, wenn der Weißpegel über einem ersten Schwellenwert liegt,
das Kontraststeuersignal (E) erhöht, wenn der Weißpegel unter einem zweiten Schwellenwert liegt, und
das Kontrastsignal (E) unverändert lässt, wenn der Weißpegel zwischen dem ersten und dem zweiten Schwellenwert bleibt; und
die Schaltung (125) zum Bearbeiten des erfassten Schwarzpegels
das Schwarzpegel-Steuersignal (K) absenkt, wenn der Schwarzpegel über einem dritten Schwellenwert liegt,
das Schwarzpegel-Steuersignal (K) erhöht, wenn der Schwarzpegel unter einem vierten Schwellenwert liegt, und
den Schwarzpegel unverändert lässt, wenn der Schwarzpegel zwischen dem dritten und dem vierten Schwellenwert bleibt.

9. Automatische Videosignal-Ausgleichsschaltung nach Anspruch 1, die des Weiteren umfasst:
1. eine Matrixschaltung (107), die RGB-Signale (F) unter Verwendung eines Ausgangs der Kontraststeuerschaltung (101) und zweier Farbdifferenzsignale (G) erzeugt;
2. einen Digital-Analog-Wandler (109) (D/A-Wandler), der digitale Ausgangssignale (F) von der Matrixschaltung (107) in analoge Videosignale umwandelt;
3. drei Videoverstärker (111), die die analogen Videosignale auf einen Pegel verstärken, der ausreicht, um eine Kathodenstrahlröhre (115) (CRT) anzusteuem;
4. drei PNP-Transistoren (113), die Kathodenstrahlstrom der CRT (115) über den Empfang des Ausgangs von drei Farben von den Videoverstärkern an jeder Basis derselben erfassen, Emitter derselben mit drei Kathoden der CRT (115) verbinden und Kollektoren bündeln;
5. einen Widerstand (117), der zwischen die verbundenen Kollektoren und Erde geschaltet ist;
6. einen Analog-Digital-Wandler (119) (A/D-Wandler), der das analoge Videosignal in ein digitales Videosignal umwandelt, wobei der A/D-Wandler (119) Signale von dem Verbindungspunkt der verbundenen Kollektoren und des Widerstandes empfängt und das analoge Videosignal an die Weißpegel-Erfassungsschaltung (103) ausgibt.

10. Automatische Videosignal-Ausgleichsschaltung nach Anspruch 2, die des Weiteren umfasst:
1. eine Matrixschaltung (107), die RGB-Signale (F) unter Verwendung eines Ausgangs der Kontraststeuerschaltung (101) und zweier Farbdifferenzsignale (G) erzeugt;
2. einen Digital-Analog-Wandler (109) (D/A-Wandler), der digitale Ausgangssignale (F) von der Matrixschaltung (107) in analoge Videosignale umwandelt;
3. drei Videoverstärker (111), die die analogen Videosignale auf einen Pegel verstärken, der ausreicht, um eine Kathodenstrahlröhre (115) (CRT) anzusteuern;
4. drei PNP-Transistoren (113), die Kathodenstrahlstrom der CRT (115) über den Empfang des Ausgangs von drei Farben von den Videoverstärkern an jeder Basis derselben erfassen, Emitter derselben mit drei Kathoden der CRT (115) verbinden und Kollektoren bündeln;
5. einen Widerstand (117), der zwischen die verbundenen Kollektoren und Erde geschaltet ist;
6. einen Analog-Digital-Wandler (119) (A/D-Wandler), der das analoge Videosignal in ein digitales Videosignal umwandelt, wobei der A/D-Wandler (119) Signale von dem Verbindungspunkt der verbundenen Kollektoren und des Widerstandes empfängt und das analoge Videosignal an die Weißpegel-Erfassungsschaltung (103) sowie die Schwarzpegel-Erfassungsschaltung (123) ausgibt.

## Revendications

1. Circuit de compensation automatique d'un signal vidéo pour compenser un signal de luminance (A) d'un récepteur de télévision en couleurs, ledit circuit de compensation automatique du signal vidéo comprenant :
(1) un circuit de commande de contraste (101) pour régler une amplitude du signal de luminance d'entrée (A) avec un signal de commande de contraste (E), et compenser un niveau de blanc du signal de luminance (A);
(2) un circuit (103) de détection du niveau de blanc pour détecter un niveau de blanc du signal de luminance (B), dont l'amplitude est réglée dans ledit circuit de commande de contraste (101); et
(3) un circuit (105) de traitement du niveau de blanc détecté pour produire ledit signal de commande de contraste (E) sur la base d'un résultat de comparaison,
**caractérisé en ce que** ladite comparaison est exécutée entre ledit niveau de blanc détecté et un niveau de blanc déterminé par le signal de réglage de contraste (D) et ledit signal de commande de contraste (E) est agencé de manière à provoquer un accroissement et une réduction de l'amplitude du signal de luminance (B).

2. Circuit de compensation automatique de signal vidéo selon la revendication 1, comprenant en outre :
(1) un circuit de compensation de niveau de noir (121) adapté pour amplifier une partie sombre du signal de luminance d'entrée (A) pour compenser un niveau du noir par commande d'une partie sombre d'un signal de sortie (B) délivré par ledit circuit de commande de contraste (101) avec un signal (A) de commande du niveau du noir;
(2) un circuit (123) de détection de niveau du noir pour détecter un niveau du noir dudit signal de luminance (M) possédant le niveau de noir compensé dans le circuit (122) de compensation du niveau du noir; et
(3) un circuit (125) de traitement du niveau du noir détecté pour produire ledit signal (E) de commande du niveau du noir sur la base d'un autre résultat de comparaison, ladite comparaison étant exécutée entre le niveau du noir détecté dans ledit circuit (123) de détection du niveau du noir et un niveau du noir prédéterminé,
ledit circuit (103) de détection du niveau du blanc étant agencé de manière à détecter un niveau du blanc dudit signal (M) dont le niveau du noir est compensé.

3. Circuit de compensation automatique de signal vidéo selon la revendication 1, dans lequel ledit circuit de traitement du niveau du blanc détecté augmente ou réduit le signal de commande de contraste selon des pas spécifié sur la base au résultat de comparaison.

4. Circuit de compensation automatique de signal vidéo selon la revendication 2, dans lequel le circuit (103) de traitement du niveau du blanc détecté augmente ou réduit le signal de commande de contraste selon des pas spécifiés sur la base du résultat de la comparaison, et
ledit circuit (125) de traitement du niveau du noir augmente ou réduit le signal de commande du niveau du noir selon des pas spécifiés sur la base de l'autre résultat de comparaison.

5. Circuit de compensation automatique de signal vidéo selon la revendication 1, dans lequel ledit circuit (105) de traitement du niveau du blanc détecté augmente ou réduit le signal de commande de contraste (E), d'un certain nombre de pas déterminés de façon adaptative en réponse au résultat de la comparaison.

6. Circuit de compensation automatique de signal vidéo selon la revendication 2, dans lequel ledit circuit (105) de traitement du niveau du blanc détecté augmente ou réduit le signal de commande de contraste, d'un certain nombre de pas déterminés de façon adaptative en réponse aux résultats de la comparaison, et
ledit circuit (125) de traitement du niveau du noir augmente ou réduit le signal de commande du niveau du noir par un certain nombre de pas déterminés de façon adaptative en réponse à l'autre résultat de comparaison.

7. Circuit de compensation automatique de signal vidéo selon la revendication 1, dans lequel ledit circuit (105) de traitement du niveau du blanc détecté réduit le signal de commande de contraste (E) lorsque le niveau du blanc est supérieur à une première valeur de seuil,
augmenté le signal (E) de commande du contraste lorsque le niveau du blanc est inférieur à une seconde valeur de seuil, et
maintient le signal (E) de commande du contraste tel qu'il est lorsque le niveau du blanc reste entre les première et seconde valeurs de seuil.

8. Circuit de compensation automatique de signal vidéo selon la revendication 2, dans lequel
ledit circuit (105) de traitement du niveau du blanc détecté réduit le signal (E) de commande du contraste lorsque le niveau du blanc est supérieur à une première valeur de seuil,
augmente le signal (E) de commande de contraste lorsque le niveau du blanc est inférieur à une seconde valeur de seuil, et
maintient le signal (E) de commande du contraste tel quel lorsque le niveau du blanc reste entre les première et seconde valeurs de seuil,
ledit circuit (125) de traitement du niveau du noir détecté
réduit le signal (K) de commande du niveau du noir lorsque le niveau du noir est supérieur à une troisième valeur de seuil,
augmente le signal (K) de commande du niveau du noir lorsque le niveau du noir est inférieur à une quatrième valeur de seuil, et
maintient le niveau du noir tel quel lorsque le niveau du noir reste enter les troisième et quatrième valeurs de seuil.

9. Circuit de compensation automatique de signal vidéo selon la revendication 1, comprenant en outre :
(1) un circuit matriciel (107) pour produire des signaux RGB (F) moyennant l'utilisation d'un signal de sortie dudit circuit (101) de commande du contraste et de deux signaux de différences de couleurs (G);
(2) un convertisseur numérique/analogique (109) (convertisseur (D/A) pour convertir des signaux de sortie numériques (F) délivrés par ledit circuit matriciel (107) en des signaux vidéo analogiques;
(3) trois amplificateurs vidéo (111) pour échantillonner lesdits signaux vidéo analogiques jusqu'à un niveau suffisant pour commander un tube cathodique (115) (CRT);
(4) trois transistors PNP (113) pour détecter le courant de rayonnement cathodique du tube cathodique (115) par réception du signal de sortie des trois couleurs provenant des amplificateurs vidéo, sur la base de chacun d'eux, connecter leurs émetteurs à trois cathodes du tube cathodique (115) et réunir en faisceau les collecteurs:
(5) une résistance (117) branchée entre lesdits collecteurs connectés et la masse;
(6) un convertisseur analogique/numérique (119) (convertisseur A/D) pour convertir le signal vidéo analogique en un signal vidéo numérique, ledit convertisseur A/D (119) recevant des signaux de la part du point de jonction desdits collecteurs connectés et de ladite résistance, et délivrant le signal vidéo analogique au circuit (103) de détection du niveau du blanc.

10. Circuit de compensation automatique de signal vidéo selon la revendication 2, comprenant en outre :
(1) un circuit matriciel (107) pour produire les signaux RGB (F) moyennant l'utilisation d'un signal de sortie dudit circuit (101) de commande de contraste et deux signaux de différences de couleurs (G);
(2) un convertisseur numérique/analogique (109) (convertisseur D/A) pour convertir des signaux de sortie numériques (F) provenant dudit circuit matriciel (107) en des signaux vidéo analogique;
(3) trois amplificateurs vidéo (111) pour amplifier lesdits signaux vidéo analogiques jusqu'à un niveau suffisant pour commander un tube cathodique (115) (CRT);
(4) trois transistors PNP (113) pour détecter un courant de rayonnement cathodique du tube cathodique CRT (115) par réception du signal de sortie des trois couleurs de la part des amplificateurs vidéo sur la base de chacun d'eux, connecter leurs émetteurs à trois cathodes du tube cathodique (115) et réunir en faisceau les collecteurs:
(5) une résistance (117) branchée entre lesdits collecteurs connectés et la masse;
(6) un convertisseur analogique/numérique (119) (convertisseur A/D) pour convertir le signal vidéo analogique en un signal vidéo numérique, ledit convertisseur A/D (119) recevant un signal de la part du point de jonction desdits collecteurs connectés et ladite résistance, et délivrant le signal vidéo analogique au circuit (103) de détection du niveau du blanc et au circuit (123) de détection du niveau du noir.
